Europäisches Patentamt

European Patent Office

Office européen des brevets

(11) Veröffentlichungsnummer: **0 309 605**

**A1**

## EUROPÄISCHE PATENTANMELDUNG

(21) Anmeldenummer: **87114315.2**

(22) Anmeldetag: **01.10.87**

(51) Int. Cl.⁴: **B65G 15/34**

(43) Veröffentlichungstag der Anmeldung:
**05.04.89 Patentblatt 89/14**

(84) Benannte Vertragsstaaten:
**AT BE DE ES FR GB GR IT NL SE**

(71) Anmelder: **OLBO Textilwerke GmbH**
**Aachener Strasse 5**
**D-5650 Solingen 11(DE)**

(72) Erfinder: **Alker, Heinrich, Dipl.-Ing.**
**Am Eichelkamp 219**
**D-4010 Hilden(DE)**
Erfinder: **Haas, Michael, Dipl.-Ing.**
**Kurlandstrasse 32**
**D-5600 Wuppertal(DE)**
Erfinder: **Schaaf, Bernard, Dipl.-Ing.**
**Gasstrasse 7**
**D-5650 Solingen(DE)**

(74) Vertreter: **Türk, Gille, Hrabal**
**Bruckner Strasse 20**
**D-4000 Düsseldorf 13(DE)**

(54) **Förderband.**

(57) Es ist ein Förderband (1) mit einer in Gummimaterial eingebetteten Gewebeeinlage offenbart, bei dem die Gewebeeinlage aus zwei im Abstand übereinander angeordneten Stengelgeweben (3,5) mit gestreckt verlaufenden Kettfäden (7) und eine gewisse Dehnbarkeit aufweisenden gecrimpten Schußfäden (8) besteht, zwischen denen sich eine Schicht (4) aus dem Gummimaterial befindet. Dieses Förderband (1) ist äußerst dehnungsarm, weist jedoch eine gute Flexibilität und Festigkeit auf und ist leicht zu spleißen und zu reparieren.

FIG.1

## FÖRDERBAND

Die Erfindung betrifft ein Förderband, das eine in Gummimaterial eingebettete Gewebeeinlage aufweist.

Förderbänder enthalten als Festigkeitsträger eine Gewebeeinlage. Die Gewebeeinlage soll einerseits die notwendige Zugfestigkeit des im Betrieb unter starke Zugspannung gesetzten Förderbandes liefern, muß andererseits aber ausreichend flexibel sein, um im Umlenkbereich des über Umlenkrollen geführten endlosen Förderbandes der dort auftretenden Biegebeanspruchung und der damit verbundenen Stauchung und Dehnung des Förderbandes ohne zu schnellen Verschleiß folgen zu können.

Hinzu kommt, daß Förderbänder und insbesondere endlose Förderbänder zumindest eine Stoßstelle aufweisen, an der Bandenden miteinander verbunden sind. Um ein Ausreißen des Förderbandes an diesen Stoß- oder Verbindungsstellen zu vermeiden, ist es bekannt, die Bandenden einander überlappend auf einer mehr oder weniger langen Strecke miteinander zu verbinden, wobei im Bereich der Verbindungsstelle zwischen die einander überlappenden Bandenden Festigkeitsträger, beispielsweise aus Stahl oder Aramid, eingelegt werden können.

Dabei ist darauf zu achten, daß die Dicke des Förderbandes im Stoßbereich bzw. Überlappungsbereich der aneinanderstoßenden Enden nicht oder jedenfalls nicht störend zunimmt. Gleichwohl ist jede Verbindungsstelle problematisch, weil hier die normalen und gewünschten Eigenschaften des Förderbandes wie Zugfestigkeit und Flexibilität beeinträchtigt werden.

Es ist bekannt, zum Erzielen einer festen, dauerhaften und flexiblen Verbindung die Enden der Gewebeeinlage des Förderbandes an den Stoßstellen durch einen sogenannten Fingerspleiß miteinander zu verbinden und um die Spleißstelle Gummimaterial aufzuvulkanisieren oder aufzukleben. Obwohl man auf diese Weise Stoßverbindungen für hohe Zug- und Biegebeanspruchungen, insbesondere beim Herstellen endloser Förderbänder, erzeugt, besteht der Nachteil, daß ein Fingerspleiß sehr kostspielig ist, weil er eine mehr oder weniger mechanisierte Arbeitsweise nicht zuläßt, sondern viel Handarbeit erfordert.

Schließlich laufen Förderbänder im Obertrum vielfach stark gemuldet, so daß sie auch in dieser Hinsicht dauerhaft sein müssen.

Bekannt sind für Förderbänder als Festigkeitsträger Gewebeeinlagen aus synthetischen Fäden in Form von Flachgeweben. Solche Festigkeitsträger bestehen bei vielen Anwendungen in der Kette aus Polyester, im Schuß aus Nylon. Ferner sind Aramidgewebe, die in der Kette aus Aramid und im Schuß aus Nylon mit einer Bindekette aus Nylon bestehen - sogenannte Stengelgewebe - oder sogenannte Cordgewebe als Festigkeitsträger für Förderbänder bekannt. Hierbei beträgt die Festigkeit (PES/PA) in Laufrichtung für eine Lage dieser Festigkeitsträger 600 N/cm bis 6300 N/cm, bei Aramidgewebe bis 20000 N/cm - als Stengelgewebe - oder - Corgewebe.

Die Arbeitsdehnung bekannter Förderbänder, die Gewebeeinlagen in mehreren Lagen enthalten, kann nur durch mehr Materialeinsatz oder, anders ausgedrückt, durch höhere Festigkeiten der einzelnen Gewebeeinlagen verringert werden. Im Festigkeitsträger eines Gewebes gemessen beträgt sie 2,5 % und mehr der Nennfestigkeit, bei Aramidgeweben allerdings nur 0,4 - 0,5 %.

Der Preis eines Förderbandes wird auch vom Festigkeitsträger wesentlich beeinflußt. Nach heutiger Preisstellung kostet ein Festigkeitsträger aus Aramidfäden in Laufrichtung ca. 130 DM/qm bei einem Gewebe der Norm 12.500 N/cm.

Bei Förderbändern mit Polyester/Polyamid-Einlagen, sogenannte Ply-Belts, gibt es keine Probleme. Bei Förderbändern mit Aramideinlage und einer Lage im Förderband kann nur der wesentlich kompliziertere "Fingerspleiß" mit Beilagengewebe und damit an dieser Stelle mit einer Verdickung des Förderbandes Anwendung finden.

Die Notlaufeigenschaften eines Förderbandes ist bei vielen Anwendungen dieser Massentransportmittel von großer Wichtigkeit, besonders dann, wenn die Wege dahin mit großen Komplikationen verbunden sind. Es ist einfacher, ein Förderband vor dem letzten "AUS" an der Stelle mit Haken zu verbinden und mit 30 % der Leistung weiterzufahren, als die Produktion einzustellen.

Bei bekannten EP Lagenbänder mit Gewebeeinlagen von 600 N/cm bis 6300 N/cm gibt es Konstruktionen besonders als zwei-Lagenbänder für den Untertagebereich, die bis zu 90 % der lösbaren Verbindung mit Haken erreichen. Sie sind jedoch nur in der Festigkeitsklasse bis 12500 N/cm im Band erhältlich. Bei Einlagen mit Aramid ist eine Hakenverbindung nicht interessant, weil sie die Zugkräfte in der Bandanlage nur kurze Zeit überstehen.

Der Erfindung liegt die Aufgabe zugrunde, ein Förderband mit einer in Gummimaterial eingebetteten Gewebeeinlage zu schaffen, das in einfacher und preiswerter Weise endlos derart ausgebildet werden kann, daß es wenigstens eine Stoßstelle aufweist, an der die miteinander verbundenen Enden des Förderbandes auf einer verhältnismäßig kurzen Länge sowohl eine ausreichend feste als auch ausreichend flexible Verbindung bilden, ohne daß im Bereich der Stoßstelle die Dicke des Förderbandes spürbar erhöht werden muß, und das eine geringe Längsdehnung und eine gute Muldungsfähigkeit aufweist.

Diese Aufgabe wird erfindungsgemäß dadurch gelöst, daß die Gewebeeinlage ein Stengelgewebe mit gestreckt verlaufenden Kettfäden und eine gewisse Dehnbarkeit aufweisenden gecrimpten Schußfäden ist.

Das erfindungsgemäße Förderband hat eine hohe Festigkeit und andererseits ein eine geringe Arbeitsdehnung, und zwar selbst im Bereich der Stoßstellen. Außerdem ist es reparaturgeeignet und hat gute Notlaufeigenschaften, weil selbst dann, wenn Fehler, beispielsweise im Bereich der Stoßstelle, auftreten, nicht unmittelbar ein Bruch zu befürchten ist. Schließlich ist es auch sehr beständig gegen die bei der Muldung erfolgenden Wechselbeanspruchungen in Querrichtung.

Vorzugsweise sind die Stengel des Stengelgewebes in einer Ebene liegend ganz dicht nebeneinander angeordnet. Die Schußfäden sind daher elastisch bis plastisch dehnbar, damit sie sich in der entsprechenden Weise um die Stengel bzw. Kettfäden oder Cordfäden legen können und sich deren Form anschmiegen, ohne dieselben aus der gewünschten Ebene herauszuziehen.

Da Förderbänder extrem stark gemuldet zumindest im Obertrum laufen, wenn man Schüttgüter fördern will, beispielsweise im Bergbau, bestehen die Schußfäden vorzugsweise aus gezielt plastifiziertem Material, und die Plastifizierung läßt sich durch Luftverwirbelung erzielen. Sobald beim Dippen des entsprechenden Cordgewebes Latex hinzukommt, wird die Plastifizierbarkeit bzw. Plastizität der Schußfäden sozusagen "eingefroren".

Die plastisch verformbaren Schußfäden können also die sehr viel dickeren und stabileren Kettfäden nicht aus der Ebene, in welcher diese liegen sollen, herausziehen. Dadurch ist eine gute Muldungsfähigkeit des Förderbandes gewährleistet.

Das erfindungsgemäße Förderband hat eine sehr geringe Arbeitsdehnung von nur ca. 1 %, was für Förderbänder ungewöhnlich ist und sich darauf zurückführen läßt, daß die Kettfäden im Stengelgewebe gerade bzw. gestreckt verlaufen. Die Arbeitsdehnung ist insbesondere dann gering, wenn das Förderband eine Gewebeeinlage enthält, die aus zwei im Abstand übereinander angeordneten Stengelgeweben mit gestreckt verlaufenden Kettfäden besteht, zwischen denen sich eine Schicht aus Gummimaterial befindet.

Bei Verwendung von Kettfäden aus Stahl oder Aramid ist nur eine Lage der Einlage des Förderbandes möglich. Bei Verwendung von Cordfäden und insbesondere Cordfäden in Stengelgewebe ist hingegen eine zweilagige Gewebeeinlage möglich.

Eine derartige zweilagige Gewebeeinlage mit einer Gummischicht zwischen den beiden Lagen macht das entsprechend ausgerüstete Förderband äußerst reparaturgeeignet und verleiht ihm gute Notlaufeigenschaften. Reparaturgeeignet ist ein derartiges Förderband deshalb, weil sich aneinanderstoßende Enden in günstiger Weise miteinander verspleißen und dadurch verbinden lassen. Es kann nämlich von jedem Förderbandende ein Abschnitt mit einer Gewebeeinlage darin überstehend ausgebildet werden, wobei diese überstehenden Enden aneinanderstoßender Förderbandstücke übereinandergelegt und zwischen diese Kautschukmaterial eingebracht wird, das zum Fertigstellen der Spleißverbindung vulkanisiert wird.

Gute Notlaufeigenschaften hat ein derartiges Förderband deshalb, weil es wegen der hohen Festigkeit der eingearbeiteten Stengelgewebe auch dann noch nicht reißt, wenn eine der beiden Gewebeeinlagen beschädigt sein sollte.

Vorzugsweise sind die gerade geführten Kettfäden der Gewebeeinlage in sich gedrehte oder verzwirnte Cordfäden, die zweckmäßig eine mittlere Drehung aufweisen.

Diese Cordfäden oder Kettfäden können aus Polyester oder einem Gemisch aus Polyester und Polyamid (EP) bestehen, während die Schußfäden vorzugsweise aus Polyamid hergestellt sind.

Die einander überkreuzenden Fäden der beiden Gewebeeinlagen können jeweils durch eine Bindekette zusammengehalten sein, wenngleich dies auch nicht in jedem Falle notwendig ist.

Nach einem weiteren Merkmal der Erfindung befindet sich im Bereich einer Verbindungsstelle oder Spleißstelle des Förderbandes zwischen den beiden Gewebeeinlagen eine Verbindungseinlage, die aus Gummi, aber auch aus einem weiteren Gewebestück bestehen kann.

Jede der Gewebeeinlagen hat beispielsweise eine Festigkeit von 1000 bis 1600 N-mm. Daraus können Förderbänder mit einer Festigkeit von 2000/2 bis 3150/2 hergestellt werden.

Beim Herstellen einer Endlosverbindung eines Förderbandes mit einer zweilagigen Einlage kann man im Bereich der Spleißstelle oder Verbindunsstelle Festigkeitsträger aus Stahl oder Aramid zwischen die aufgeklappten Lagen der aneinanderstoßenden Förderbandenden einbringen. Dadurch läßt sich eine kurze Verbindungsstelle von beispielsweise etwa 800 mm erzielen, während man auf einen Fingerspleiß verzichten kann.

Die bisher üblichen Förderbänder mit einlagiger textiler Gewebeeinlage haben eine Festigkeit von nicht über 630 N/mm. Höhere Festigkeiten lassen sich nur bei Verwendung von Aramid erzielen, jedoch sind Aramidfäden ebensowenig wie Stahldrähte für eine zweilagige Verstärkung eines Förderbandes geeignet.

Die Drehung der Kettfäden sollte optimiert sein. Ist die Drehung zu hoch, verliert der Kettfaden an Festigkeit, bei zu geringer Drehung ergibt sich an den Umlenkstellen des Förderbandes keine ausreichende Stauch- und Dehnbarkeit der Kettfäden der Gewebeeinlage.

Die Drehung bzw. Verzwirnung der Kettfäden ersetzt einen Crimp und führt zu geringer Arbeitsdehnung, insbesondere wenn die Kettfäden nicht gewellt verlaufen, sondern gestreckt. Dabei hängt die Drehung bzw. der Twist von der Dicke der einzelnen Kettfäden und der Menge der Teilfäden, aus der jeder Kettfaden gebildet ist, ab.

Bei dem erfindungsgemäßen Förderband beträgt die Festigkeit (PES/PA) in Laufrichtung für einen Lage des Festigkeitsträgers 8000 N/cm bis 20000 N/cm. Aramidgewebe als Stengel- oder Cordgewebe haben eine spezielle Cordkonstruktion. Interessant ist die Arbeitsdehnung bei 10 % der Nennfestigkeit, weil sie bei Förderbändern mit hohen Festigkeiten die Spannwege und damit den Platzbedarf (Untertage) und die Kosten der Anlage beeinflußt.

Die sich im Betrieb einstellende Arbeitsdehnung beträgt bei der neuen Konstruktion aus Polyester/Nylon etwa 1 % + 0,2.

Der Preis der neuen Festigkeitsträger aus Polyester/Nylon beträgt bei gleicher Festigkeit wie die eines bekannten Aramid-Gewebes der Norm 12500 N/cm DM 40,--/qm. Die Möglichkeit der Endlosverbindung eines Förderbandes gehört bei der Konstruktion zu den wichtigsten Eigenschaften.

Zwischen den beiden Festigkeitsträgern des Förderbandes kann ein Cordgewebe aus hochfesten Fibers wie Aramid oder andere eingearbeitet sein. Die tragenden PES-Einlagen werden dabei getrennt versetzt. Damit wird 90 % der Verbindungsfestigkeit erreicht.

Bei einer Untersuchung ergab sich eine Hakenverbindung mit einem modernen Haken bei einem Förderband mit 25000 N/cm noch respektable 40 % der Nennfestigkeit.

Mit dem erfindungsgemäßen Förderband erzielt man

    a. Festigkeiten wie bei Verwendung von STahl und Aramid für den Festigkeitsträger;

    b. Arbeitsdehnungen in der Nähe von Stahl und Aramid;

    c. Endlosverbindungen, die besser und problemloser als bei STahl und Aramid sind;

    d. eine Reparaturfähigkeit, die besser als bei Verwendung von Stahl und Aramid ist;

    e. eine preiwertere Herstellung gegenüber Lagenbändern;

    f. eine bessere Ausnutzung der Gewebefestigkeit durch die Konstruktion;

    g. eine geringere Arbeitsdehnung durch hochdehnenden Schuß, der em dicken Kettfaden den geraden Verlauf im Gewebe möglich macht, wodurch sich die geringe Konstruktionsdehnung des Förderbandes in Laufrichtung ergibt;

    h. höhere Festigkeiten der Festigkeitsträger als bei bekannten Lagerbändern;

    i. wegen der geringeren Dicke der Förderbänder größere Längen bei Herstellung und Transport und weniger Verbindungsstellen bei langen Förderbändern;

    j. einen geringeren Materialverbrauch und damit verbesserte Wirtschaftlichkeit.

In der Zeichnung ist ein Ausführungsbeispiel des erfindungsgemäßen Förderbandes schematisch dargestellt, und zwar zeigt

    Fig. 1 einen Längsschnitt durch einen Teil des Förderbandes,

    Fig. 2 eine schematische Darstellung eines für das erfindungsgemäße Förderband geeigneten Stengelgewebes und

    Fig. 3 eine schematische Ansicht eines anderen für das erfindungsgemäße Förderband geeigneten Stengelgewebes.

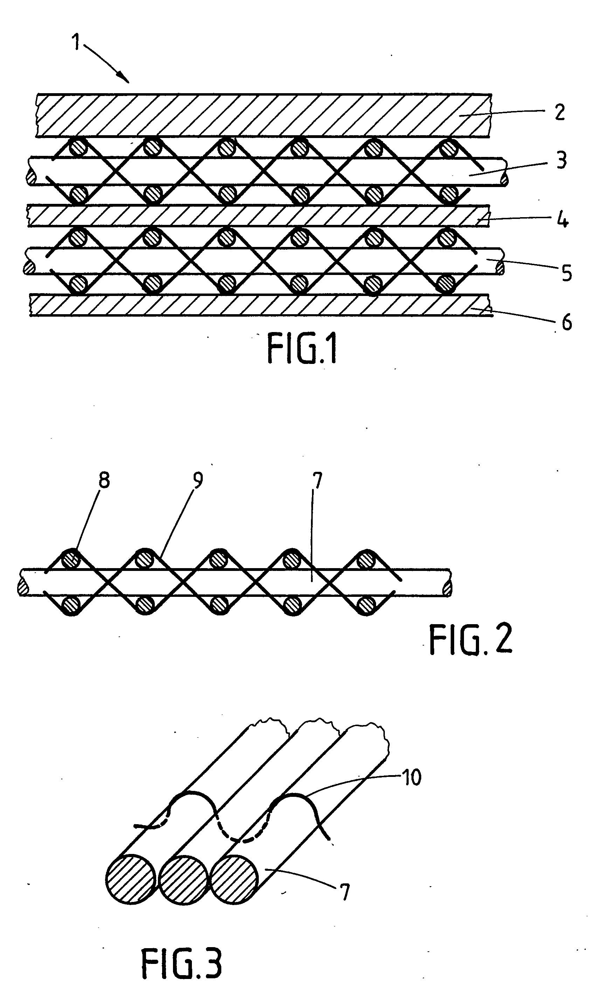

Das in Fig. 1 erkennbare Förderband (1) besteht allgemein gesprochen aus fünf Lagen, nämlich einer oberen, beispeilsweise 5 mm dicken Gummischicht (2), einer darunter angeordneten Gewebeeinlage (3), einer mittleren, beispielsweise 2,5 mm dicken Gummischicht (4), einer weiteren Gewebeeinlage (5) und einer unteren, wiederum beispielsweise 2,5 mm dicken Gummischicht (6). Die Gewebeeinlagen (3 und 5) sind dabei im Gummimaterial eingebettet, so daß das Förderband insgesamt ein integrales Gebilde darstellt.

Im Bereich einer Spleißstelle, d.h. einer Stelle, an der die Enden von zwei Förderbandstücken miteinander verbunden werden, trennt man das Förderband zwischen den beiden Gewebeeinlagen (3 und 5) in Längsrichtung auf und entfernt die mittlere Gummischicht (4). Die eine Gewebeeinlage wird mit der zugehörigen äußeren Gummischicht (2 bzw. 6) auf einer gewissen Länge abgeschnitten. Das anzusetzende Förderbandstück wird in ähnlicher Weise vorbereitet. Die so vorbereiteten Enden der beiden Förderbandstücke werden aufeinander gelegt, wobei die mittlere Gummischicht (4) durch grünes Kautschukmaterial ersetzt wird, das zum Fertigstellen der Verbindungsstelle bzw. der Stoßstelle ausvulkanisiert wird.

Dabei ist es auch möglich, im Bereich der mittleren Gummischicht (4) eine Verstärkungseinlage vorzusehen, beispielsweise aus Stahldraht oder hochfesten textilen Fäden wie Aramid.

Jede Gewebeeinlage (3 bzw. 5) ist ein Stengelgewebe der beispielsweise in Fig. 2 und 3 dargestellten Art.

Gemäß Fig. 2 besteht das Stengelgewebe aus Kettfäden (7) verhältnismäßig großen Durchmessers, vorzugsweise textilen Cordfäden mit einer gewissen Drehung bzw. einem gewissem Twist, was diesen gestreckt verlaufenden Kettfäden (7) eine bestimmte Dehnbarkeit und auch Stauchfähigkeit verleiht.

Die in einer Ebene nebeneinander liegenden Kettfäden (7) sind über quer zu ihnen verlaufende Schußfäden (8) und diese zusammenhaltenden, eingewebten Bindefäden (9) zusammengehalten.

Bei der Ausführungsform gemäß Fig. 3 sind die in einer Ebene nebeneinander liegenden Kettfäden (7) von plastisch dehnbaren Schußfäden (10) zusammengehalten. Diese Schußfäden (10) legen sich um die dicht nebeneinander angeordneten Kettfäden (7) in der in Fig. 3 gezeigten Weise, so daß die Gewebeeinlage nicht nur eine hohe Zugfestigkeit aufweist, sondern auch dem entsprechend ausgerüsteten Förderband eine gute Muldungsfähigkeit verleiht. Die plastisch dehnbaren Schußfäden (10) ziehen die Kettfäden (7) nicht aus deren Ebene heraus.

Durch die Erfindung wird ein hochfestes und äußerst dehnungsarmes Förderband geschaffen, das zwei Gewebeeinlagen aus hochfesten Fäden, beispielsweise hochfesten Polyesterfäden, enthält. Dieses Förderband hat eine äußerst geringe Arbeitsdehnung, ist jedoch ausreichend flexibel, um an Umlenkstellen die hier benötigte Biegsamkeit zu gewährleisten. Andererseits hat dieses Förderband eine gute Muldungsfähigkeit, so daß es für den Transport von Schüttgütern wie beispielsweise Kohle gut geeignet ist. Da gewährleistet ist, daß die Kettfäden in den Gewebeeinlagen grade verlaufen, erreicht man eine ungewöhnlich niedrige Arbeitsdehnung des Förderbandes von nur etwa 1 %.

## Ansprüche

1. Förderband, mit einer in Gummimaterial eingebetteten Gewebeeinlage, **dadurch gekennzeichnet,** daß die Gewebeeinlage ein Stengelgewebe mit gestreckt verlaufenden Kettfäden und eine gewisse Dehnbarkeit aufweisenden gecrimpten Schußfäden ist.

2. Förderband nach Anspruch 1, dadurch gekennzeichnet, daß die Schußfäden der Gewebeeinlage plastisch dehnbar sind.

3. Förderband nach Anspruch 1 oder 2, dadurch gekennzeichnet, daß die Kettfäden der Gewebeeinlage in einer Ebene dicht nebeneinander liegen und die gegenüber den Kettfäden wesentlich dünneren Schußfäden um die Kettfäden gelegt sind.

4. Förderband nach einem der Ansprüche 1 bis 3, dadurch gekennzeichnet, daß die Gewebeeinlage aus zwei im Abstand übereinander angeordneten Stengelgeweben mit gestreckt verlaufenden Kettfäden besteht, zwischen denen sich eine Schicht aus dem Gummimaterial befindet.

5. Förderband nach einem der Ansprüche 1 bis 4, dadurch gekennzeichnet, daß die Kettfäden der Gewebeeinlagen in sich gedrehte oder verzwirnte Cordfäden sind.

6. Förderband nach Anspruch 5, dadurch gekennzeichnet, daß die Cordfäden eine mittlere Drehung aufweisen.

7. Förderband nach einem der Ansprüche 1 bis 6, dadurch gekennzeichnet, daß die Kettfäden der Gewebeeinlagen aus Polyester oder einem Gemisch aus Polyester und Polyamid (EP) und die Schußfäden aus Polyamid bestehen.

8. Förderband nach einem der Ansprüche 1 bis 7, dadurch gekennzeichnet, daß die sich kreuzenden Fäden der beiden Gewebeeinlagen durch eine Bindekette zusammengehalten sind.

9. Förderband nach einem der Ansprüche 1 bis 8, dadurch gekennzeichnet, daß es an Verbindungsstellen zwischen den beiden Gewebeeinlagen eine Verbindungseinlage enthält.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-1 556 132 (OLBO TEXTILWERKE) * Seite 4, Zeile 10 - Seite 5, Zeile 16; Figuren 1-3 * | 1,4,7,8 | B 65 G 15/34 |
| A | DE-U-7 924 936 (VERSEIDAG-INDUSTRIETEXTILIEN) * Seite 2, Zeilen 1-38; Figuren 1-3 * | 1,3 | |
| A | GB-A- 16 626 (SINCLAIR) * Seite 4, Zeilen 10-36 * | 1,3-5 | |
| A | US-A-4 253 836 (MIRANTI) * Spalte 4, Zeilen 17-32; Figur 15 * | 1,3 | |
| A | DE-A-2 412 001 (SIEGLING) * Ansprüche 5, 7, 8 * | 1,5,7,8 | |
| A | GB-A-1 399 896 (PNEUMATIQUES) * Seite 1, Zeilen 45-84 * | 1,7 | |
| A | DE-U-8 229 219 (PHOENIX) * Seite 3, Zeilen 1-8; Figur * | 1,9 | RECHERCHIERTE SACHGEBIETE (Int. Cl.4) B 65 G 15/00 F 16 G 1/00 |

Der vorliegende Recherchenbericht wurde für alle Patentansprüche erstellt

| Recherchenort | Abschlußdatum der Recherche | Prüfer |
|---|---|---|
| BERLIN | 14-05-1988 | SIMON J J P |